# EUROPEAN PATENT APPLICATION

(11) **EP 3 578 245 A1**
(43) Date of publication of application: **11.12.2019**
(21) Application number: 18175956.4
(22) Date of filing: 05.06.2018
(51) Int. Cl.: B01D 39/16, B01D 39/20

(54) **MULTILAYER FILTER SCREEN AND MANUFACTURING METHOD THEREOF**

(71) Applicant: Fanno Technologies Co., Ltd, 404 Taichung City (TW)
(72) Inventor: FANG, Yu-Hsun, 404 Taichung City (TW); LIN, Pi-Min, 404 Taichung City (TW); CHEN, Chi-Han, 404 Taichung City (TW)
(74) Representative: Viering, Jentschura & Partner mbB Patent- und Rechtsanwälte

(57) **Abstract**

A multilayer filter screen (100) and the manufacturing method thereof are provided. The multilayer filter screen (100) includes a conductive powder layer (10) and a plastic powder layer (20). The conductive powder layer (10) and the plastic powder layer (20) are stacked up through a solidifying process. Therefore, the mechanical structural strength and the anti-static electricity function of the multilayer filter screen (100) are improved.

## Description

### BACKGROUND OF THE INVENTION

### 1. Field of the Invention:

The present invention relates to filter screens, and more particularly, to a multilayer filter screen.

### 2. Description of the Related Art:

As the consciousness of environmental protection rising, people gradually pay more attention to the ecological environment and quality of air. To reduce dust pollution during industrial manufacturing process, a dust cleaner is usually applied for preventing dust from polluting the air.

In the dust cleaning process, an exhauster produce powerful air exhaustion through the filter screen of the dust cleaner, such that dust in the air will be attached to the filter screen, thereby removing the dust from the air. When the dust attached to the filter screen is to be cleansed from the filter screen, a compressed air is applied for spurting a high-speed and high-pressure air stream, such that the screen filter rapidly expands to shake off the dust, achieving the dust cleaning function.

A conventional filter screen is formed of a plastic material and an electrically conductive material, wherein the plastic material enhances the structural strength of the filter screen, and the electrically conductive material is applied for preventing the dust from generating a static electricity which may cause explosion.

A conventional manufacturing method of a filter screen includes steps of: mixing the powder of a plastic material and the powder of an electrically conductive material to form a powder mixture; and placing the powder mixture in a mold to form a composite sheet through a sintering process of the powder mixture.

Based on the fact that the electrically conductive powder particle will be included among the plastic powder particles, the plastic powder particles are prevented from being completely combined with each other. After the solidifying process, the overall structural strength between each plastic powder particle is lowered, causing a less than optimal mechanic structural strength of the finished filter screen. As a result, during the dust removing and dust cleansing process, the filter screen may deform due to repeatedly compression and expansion caused by the powerful air stream, such that the filter screen is structurally weakened, so as to be easily damaged and deprived of the dust removing function after a long period of usage.

Furthermore, the plastic powder particles will also be included among the electrically conductive powder particles. After the solidifying process, the overall structural strength between each conductive powder particle is lowered, thus unable to improve the anti-static electricity capability of the filter screen. As a result, during the dust removing and dust cleansing process, static electricity may be generated between the filter screen and the dust, further causing a possibility of a hazardous explosion.

### SUMMARY OF THE INVENTION

For improving the issues above, a multilayer filter screen is disclosed. With several layers of material being stacked up, the overall structural strength of the filter screen is improved, and the anti-static electricity capability is enhanced.

Also, a manufacturing method of a multilayer filter screen is disclosed for simplifying the steps and the cost of manufacturing the filter screen.

A multilayer filter screen in accordance with an embodiment of the present invention comprises:
a conductive powder layer; and
a plastic powder layer attached to one side of the conductive powder layer, such that the conductive powder layer and the plastic powder layer are combined through a solidifying process.

With such configuration, the present invention combines the conductive powder layer and the plastic powder layer to form a multilayer filter screen, such that the conductive powder and the plastic powder are prevented from being mixed with each other, further improving disadvantages caused by conventional powder mixture. Also, structural strength of the plastic powder layer and the conductive powder layer are assured, thereby improving the mechanical structure and the anti-static electricity function.

A method of manufacturing a multilayer filter screen in accordance with an embodiment of the present invention comprises following steps:
evenly laying a conductive powder material layer in a mold;
placing a plastic powder material layer on the conductive powder material layer; and
solidifying the conductive powder material layer to form a conductive powder layer, and solidifying the plastic powder material layer to form a plastic powder layer, such that the conductive powder layer and the plastic powder layer are stacked to form a multilayer filter screen through the solidifying process.

With such method, the conductive powder material layer and the plastic powder material layer are respectively placed in the mold, assuring the structural strength of the plastic powder layer and the conductive powder layer, thus effectively improving the mechanical structure and the anti-static electricity function of the multilayer filter screen.

Further, in the manufacturing process of the multilayer filter screen in accordance with the present invention, a high-intensity and high-anti-static electricity multilayer filter screen is formed in a single solidifying step. Therefore, the manufacturing process of the present invention is simplified, further lowering the cost of manufacture.

### BRIEF DESCRIPTION OF THE DRAWINGS

**Fig. 1** is a perspective view of the multilayer filter screen in accordance with an embodiment of the present invention.
**Fig. 2** is a side view of **Fig. 1****.**
**Fig. 3** is a perspective view of the multilayer filter screen in accordance with another embodiment of the present invention.
**Fig. 4** is a side view of **Fig. 3****.**

### DETAILED DESCRIPTION OF THE INVENTION

The aforementioned and further advantages and features of the present invention will be understood by reference to the description of the preferred embodiment in conjunction with the accompanying drawings where the components are illustrated based on a proportion for explanation but not subject to the actual component proportion.

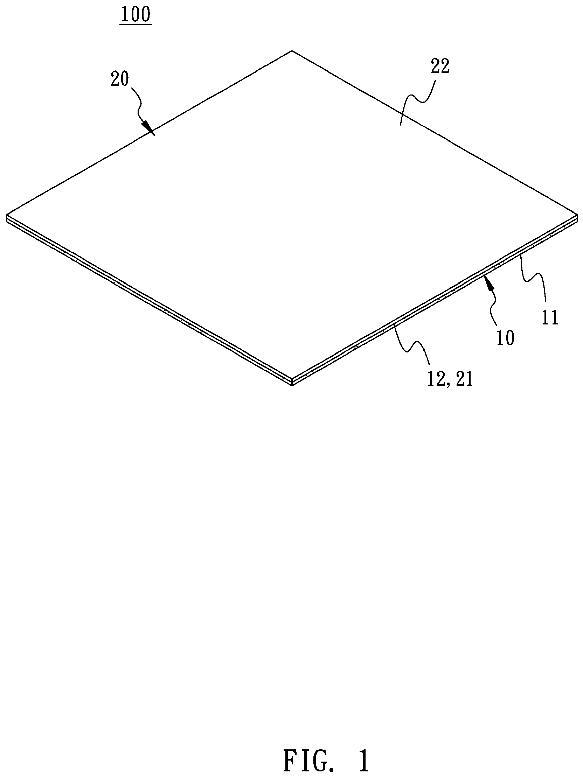

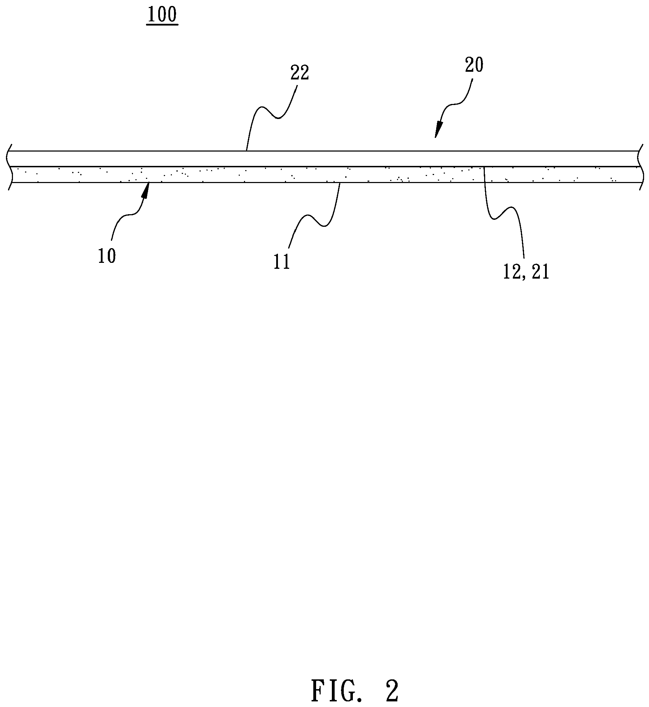

Referring to **Fig. 1** to **Fig. 2****,** a multilayer filter screen **100** in accordance with an embodiment of the present invention comprises a conductive powder layer **10** and a plastic powder layer **20.**

The conductive powder layer **10** is formed of an electrically conductive powder material. The thickness of the conductive powder layer **10** is defined as a first thickness, wherein the first thickness of the conductive powder layer **10** relates to the electrical conductivity of the multilayer filter screen **100,** such that a greater thickness brings a better conductivity. The conductive powder layer **10** comprises a first conductive face **11** and a second conductive face **12.** Also, the conductive powder material for forming the conductive powder layer **10** is allowed to be carbon black powder or aluminum powder. In an embodiment of the present invention, the conductive powder layer **10** is formed of carbon black powder.

The plastic powder layer **20** is formed of a plastic powder material. In an embodiment of the present invention, the plastic powder material is a polypropylene (PP) material. The thickness of the plastic powder layer **20** is defined as a second thickness, wherein the second thickness of the plastic powder layer **20** relates to the structural strength of the multilayer filter screen **100,** such that a greater second thickness brings a greater structural strength. The second thickness is allowed to be equal or unequal to the first thickness. In an embodiment of the present invention, the second thickness is equal to the first thickness. The plastic powder layer **20** comprises a first plastic face **21** and a second plastic face **22.** The first plastic face **21** of the plastic powder layer **20** completely covers the second conductive face **12** of the conductive powder layer **10.**

Also, the conductive powder layer **10** and the plastic powder layer **20** are stacked up through a solidifying process, so as to form the multilayer filter screen **100.**

The manufacturing method of the multilayer filter screen **100** in accordance with the aforementioned embodiment comprises following steps.

First, the conductive powder material is evenly laid to reach the first thickness in a housing space of a mold to form a conductive powder layer, wherein the first thickness is allowed to be adjusted according to the user demand.

Next, the plastic powder material is evenly laid to reach the second thickness upon the conductive powder material layer in the housing space of the mold to form a plastic powder material layer, wherein the second thickness is allowed to be adjusted according to the user demand. In an embodiment of the present invention, the second thickness is equal to the first thickness.

Then, carry out a solidifying process to form the conductive powder material layer into the conductive powder layer **10** and form the plastic powder material layer into the plastic powder layer **20,** wherein the conductive powder layer **10** and the plastic powder layer **20** are stacked up to form the multilayer filter screen **100** by the solidifying process. In an embodiment of the present invention, the multilayer filter screen **100** is formed in a rectangular shape. However, the multilayer filter screen **100** is allowed to be formed in any shapes according to the user demand.

In addition, the solidifying process is allowed to be a sintering process or a melting process. In an embodiment of the present invention, the solidifying process is a sintering process, wherein the sintering temperature ranges from 150 to 250 Celsius degrees. For further illustration, the solidifying process melts the conductive powder material with a high temperature, such that the melted conductive powder material becomes viscous. Therefore, each conductive powder material particle is combined with each other, thereby forming the sheet shaped conductive powder layer **10.** Similarly, the solidifying process melts the plastic powder material, such that the melted plastic powder material becomes viscous. Therefore, each plastic powder material particle is combined with each other, thereby forming the sheet shaped plastic powder layer **20.** Subsequently in the solidifying process, the conductive powder layer **10** and the plastic powder layer **20** are stacked up in a pressing manner, so as to form the multilayer filter screen **100.** Therefore, the structural strength of the conductive powder layer **10** and the plastic powder layer **20** are assured. With the second thickness of the plastic powder layer 20 and the first thickness of the conductive powder layer 10 being equal, the multilayer filter screen 100 in accordance with an embodiment of the present invention acquires a balanced structural strength and electrical conductivity, thereby effectively improving the mechanical structure and the anti-static electricity function of the multilayer filter screen **100.**

When the multilayer filter screen **100** of the embodiment is applied to a dust cleaner, the first conductive face **11** of the conductive powder layer **10** faces toward the outer side of the dust cleaner, and the second plastic face **22** of the plastic powder layer **20** faces toward the inner side of the dust cleaner. As the dust cleaner removes dust from the air, the exhauster of the dust cleaner exhausts a power air stream toward the multilayer filter screen **100** in the dust cleaner, forcing the dust in the air to be attached to the first conductive face **11** of the conductive powder layer **10,** and the conductive powder layer **10** is capable of reducing the possibility of the occurrence of static electricity, so as to prevent a possible explosion.

Further, when the dust attached to the multilayer filter screen **100** is to be cleansed off, the user is able to apply a compressed air to spurt a high-speed and high-pressure air stream from the second plastic face **22** of the plastic powder layer **20** toward the first conductive face **11** of the conductive powder layer **10,** such that the multilayer filter screen **100** rapidly expands to shake off the dust for cleansing the dust off from the multilayer filter screen **100.** During such dust cleansing process, the multilayer filter screen **100** undergoes a compressing or expanding motion, and the plastic powder layer **20** improves the mechanical structural strength of the multilayer filter screen **100,** so as to prevent the multilayer filter screen **100** from damage caused by the compressing or expanding effects, and increase the service life of the multilayer filter screen **100.**

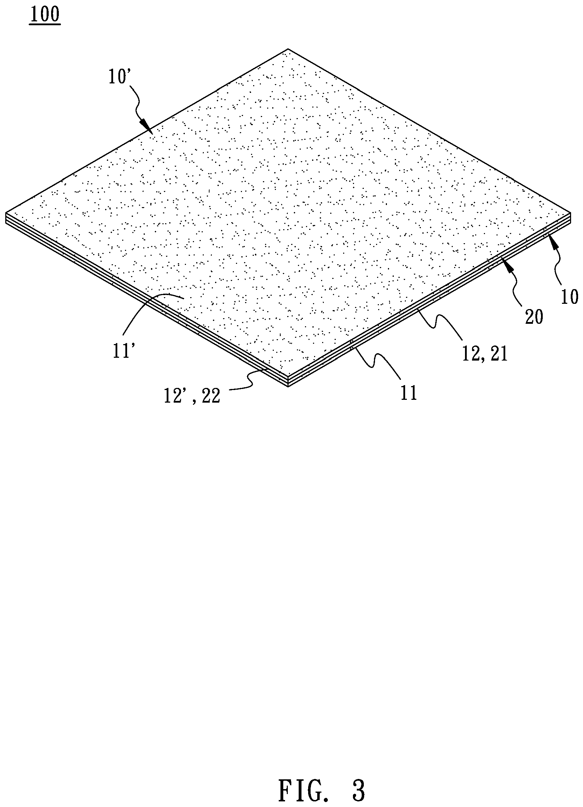

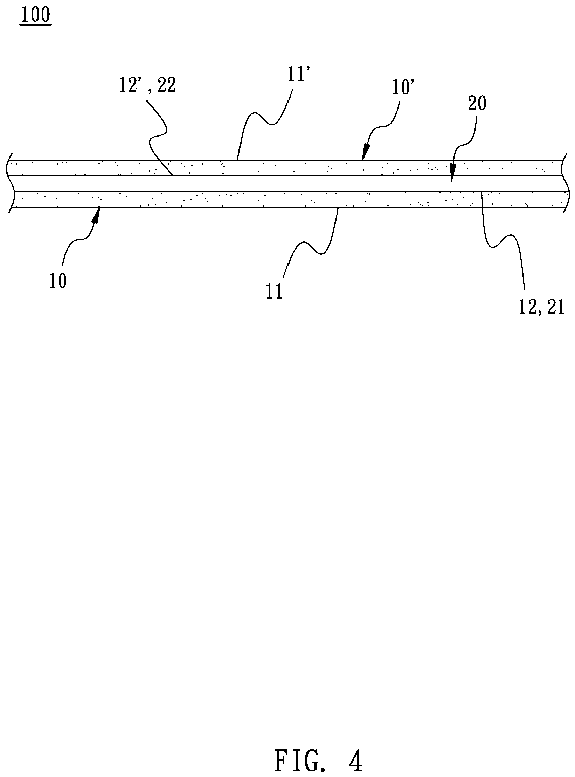

Referring to **Fig. 3** to **Fig. 4****,** the multilayer filter screen **100** in accordance with the second embodiment of the present invention is illustrated, wherein the explanation of identical reference numbers in the drawings are herein omitted. The difference between the second embodiment and the first embodiment will be illustrated.

In the multilayer filter screen **100** in accordance with the second embodiment, a first conductive powder layer 10 and a second conductive powder layer **10'** are provided, with the plastic powder layer **20** disposed between the first and second conductive powder layers **10,10'.** The first plastic face **21** of the plastic powder layer **20** completely covers the second conductive face **12** of the first conductive powder layer **10,** and the second plastic face **22** of the plastic powder layer **20** is covered by the second conductive face **12'** of the second conductive powder layer **10'.** The two conductive powder layers **10,10'** are combined with the plastic powder layer **20** by the solidifying process, wherein the conductive powder materials applied to form the first and second conductive powder layers **10,10'** are allowed to be identical or different from each other.

The manufacturing method of the multilayer filter screen **100** in accordance with the second embodiment comprises following steps.

First, the first conductive powder material is evenly laid to reach the first thickness in a housing space of a mold to form a first conductive powder material layer, wherein the first thickness is allowed to be adjusted according to the user demand.

Next, the plastic powder material is evenly laid to reach the second thickness upon the first conductive powder material layer in the housing space of the mold to form a plastic powder material layer.

Next, the conductive powder material is again evenly laid upon the plastic powder material layer to form a second conductive powder material layer, such that the plastic powder material layer is sandwiched between the first conductive powder material layer and second conductive powder material layer.

Then, carry out a solidifying process to form the two conductive powder material layers into the first conductive powder layer **10** and the second conductive powder layer 10', and also to form the plastic powder material layer into the plastic powder layer **20,** wherein the first and second conductive powder layers **10,10'** have a first conductive face **11,11'** and a second conductive face **12,12',** respectively, and the first and second conductive powder layers **10,10'** are stacked up with the plastic powder layer **20** to form the multilayer filter screen **100** by the solidifying process in a pressing manner. In the embodiment of the present invention, the multilayer filter screen **100** is formed in a rectangular shape. However, the multilayer filter screen **100** is allowed to be formed in any shapes according to the user demand.

When the multilayer filter screen **100** in accordance with the second embodiment is applied to a dust cleaner, the exhauster of the dust cleaner exhausts a power air stream toward the multilayer filter screen **100** in the dust cleaner, forcing the dust in the air to be attached to the first conductive face **11** of the conductive powder layer **10.** With two conductive powder layers **10,10',** the possibility of the occurrence of static electricity is further reduced, so as to effectively prevent a possible explosion and further increase the safety during operation. With such configuration, the present invention achieves following objectives.

The conductive powder layer **10** and the plastic powder layer **20** are stacked up to form the multilayer filter screen **100,** such that the conductive powder layer **10** and the plastic powder layer **20** are prevented from being mixed with each other. Therefore, the structural strength of the conductive powder layer **10** and the plastic powder layer **20** are assured, thus improving the mechanical structure and the anti-static electricity function of the multilayer filter screen **100.**

During the dust removing or dust cleansing process, the plastic powder layer **20** improves the mechanical structural strength of the multilayer filter screen **100,** so as to prevent the multilayer filter screen **100** from damage due to compressing or expanding motions, thus increasing the service life of the multilayer filter screen **100.**

In the manufacturing process of the multilayer filter screen **100** in accordance with the present invention, the high-intensity and high-anti-static electricity multilayer filter screen **100** is formed in a single solidifying step. Therefore, the manufacturing process of the present invention is simplified, further lowering the cost of manufacture

Although particular embodiments of the invention have been described in detail for purposes of illustration, various modifications and enhancements may be made without departing from the spirit and scope of the invention. Accordingly, the invention is not to be limited except as by the appended claims.

## Claims

1. A multilayer filter screen (100), comprising:
a first conductive powder layer (10), having a first conductive face (11) and a second conductive face (12) in opposite to the first conductive face (11); and
a plastic powder layer (20), having a first plastic face (21) and a second plastic face (22) in opposite to the first plastic face (21), the first plastic face (21) attached to the second conductive face (12), the first conductive powder layer (10) and the plastic powder layer (20) being formed and stacked up through a solidifying process.

2. The multilayer filter screen (100) of claim 1, wherein the plastic powder layer (20) completely covers the second conductive face (12) of the first conductive powder layer (10).

3. The multilayer filter screen (100) of claim 1, wherein the solidifying process is chosen from a group consisting of a sintering process and a melting process.

4. The multilayer filter screen (100) of claim 1, wherein a material for forming the first conductive powder layer (10) is chosen from a group consisting of carbon black powder and aluminum powder.

5. The multilayer filter screen (100) of claim 1, further comprising a second conductive powder layer (10'), with the plastic powder layer (20) disposed between the first and second conductive powder layers (10,10'), the first plastic face (21) of the plastic powder layer (20) covering the second conductive face (12) of the first conductive powder layer (10), and the second plastic face (22) of the plastic powder layer (20) being covered by a second conductive face (12') of the second conductive powder layer (10').

6. The multilayer filter screen (100) of claim 5, wherein the two conductive powder layers (10,10') and the plastic powder layer (20) are combined through the solidifying process.

7. The multilayer filter screen (100) of claim 5, wherein the solidifying process is chosen from a group consisting of a sintering process and a melting process.

8. The multilayer filter screen (100) of claim 5, wherein the first conductive powder layer (10) and the second conductive powder layer (10') are formed of different materials.

9. The multilayer filter screen (100) of claim 5, wherein the first conductive powder layer (10) and the second conductive powder layer (10') are formed of identical materials.

10. The multilayer filter screen (100) of claim 5, wherein the materials for forming the first conductive powder layer (10) and the second conductive powder layer (10') are chosen from a group consisting of carbon black powder and aluminum powder, respectively.

11. A manufacturing method of a multilayer filter screen (100), comprising following steps:
(a) evenly laying a first conductive powder material layer in a mold;
(b)laying a plastic powder material layer upon the first conductive powder material layer; and
(c) carrying out a solidifying process, so as to form the first conductive powder material layer into a first conductive powder layer (10) and form the plastic powder material layer into a plastic powder layer (20), such that the first conductive powder layer (10) and the plastic powder layer (20) are stacked up to form the multilayer filter screen (100) through the solidifying process.

12. The manufacturing method of claim 11, wherein the plastic powder material layer is evenly laid upon the first conductive powder material layer.

13. The manufacturing method of claim 11, wherein the solidifying process is chosen from a group consisting of a sintering process and a melting process.

14. The manufacturing method of claim 11, wherein in step (b), after laying the plastic powder material layer, further laying a second conductive powder material layer upon the plastic powder material layer, such that in step (c), the solidifying process also forms the second conductive powder material layer into a second conductive powder layer (10'), thus forming the plastic powder layer (20) between the first and second conductive powder layers (10,10').

15. The manufacturing method of claim 14, wherein the solidifying process is chosen from a group consisting of a sintering process and a melting process.
